# DEMANDE DE BREVET EUROPEEN

(11) **EP 4 574 921 A1**
(43) Date de publication de la demande: **25.06.2025**
(21) Numéro de dépôt: 23219375.5
(22) Date de dépôt: 21.12.2023
(51) Int. Cl.: C09K 11/02, C08K 3/22, C08K 3/36, C08K 5/43, C09K 11/77, C08L 63/00

(54) **MATÉRIAU PHOTOLUMINESCENT DE COULEUR CLAIRE**

(71) Demandeur: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH)
(74) Mandataire: ICB SA

(57) **Abrégé**

L'invention concerne un matériau photoluminescent comportant en poids une matrice polymérique dans un pourcentage compris entre 19,3% et 54,3%, un composé photoluminescent dans un pourcentage compris entre 45% et 80%, un oxyde de zirconium dans un pourcentage compris entre 0,5% et 15%, un azurant optique dans un pourcentage compris entre 0,2% et 7% et optionnellement un oxyde d'aluminium dans un pourcentage compris entre 0% et 5%, une silice poreuse dans un pourcentage compris entre 0% et 0,3%, un système de colorants et des additifs avec un pourcentage total pour le système de colorants et les additifs compris entre 0% et 15%.

L'invention concerne également l'article revêtu avec ce matériau photoluminescent ou réalisé en masse avec ledit matériau photoluminescent.

## Description

### Domaine technique de l'invention

L'invention concerne un matériau photoluminescent de couleur claire avec une performance lumineuse optimisée.

### Arrière-plan technologique

Les pigments phosphorescents de type aluminate de strontium dopés Europium, Dysprosium (Eu²⁺,Dy³⁺:SrAl₂O₄) sont fréquemment utilisés pour réaliser des matériaux photoluminescents. Ces pigments avec émission verte ou bleue ont souvent une teinte jaunâtre, ce qui rend compliqué l'obtention de certaines couleurs claires. L'adjonction de dopants tels que du calcium dans la maille cristalline permet de blanchir les pigments mais cela impacte notablement les performances lumineuses.

On réalise que certains composés utilisés dans la matière photoluminescente, y compris les pigments colorants ont un effet d'extinction, dit quenching en anglais, des propriétés luminescentes, la luminance des matériaux phosphorescents étant le résultat d'une interaction physico-chimique entre les composés du matériau photoluminescent.

Une optimisation combinée de la coloration et des propriétés lumineuses n'est donc pas aisée. Afin de mettre au point une formulation, les inventeurs de la présente invention ont réalisé des essais avec des composés minéraux tels que le TiO₂, CaCOs, ZnO, BaSO₄, SiO₂ et Al₂O₃ pour blanchir le matériau luminescent. Les composés minéraux ont été ajoutés dans une matrice polymérique de type époxy chargée à 60% en poids de pigments phosphorescents de type aluminate de strontium dopés Europium, Dysprosium (Eu²⁺,Dy³⁺:SrAl₂O₄). Les essais ont montré que ces composés minéraux ont un impact négatif sur les propriétés lumineuses. Un optimum est donc toujours à trouver entre la couleur perçue de jour et la photoluminescence.

### Résumé de l'invention

L'invention consiste en une nouvelle formulation pour les couleurs blanches et de manière plus générale pour les couleurs claires permettant d'obtenir une belle couleur claire de jour tout en ayant de bonnes propriétés luminescentes.

A cet effet, il est proposé d'ajouter dans la formulation de l'oxyde de zirconium (ZrO₂), plus spécifiquement de la zircone stabilisée et encore plus spécifiquement de la zircone yttriée à 4% ou 5% molaire, un azurant optique et éventuellement de l'oxyde d'aluminium (Al₂O₃). Cette combinaison permet d'obtenir le meilleur compromis blancheur et performance lumineuse pour combattre le caractère jaunâtre des pigments dérivés d'aluminate alcalino-terreux dopé aux terres rares. Ensuite, la couleur peut éventuellement être ajustée pour être dégradée dans des nuances claires via l'ajout d'un système de coloration.

Plus précisément, l'invention se rapporte à un matériau photoluminescent comportant en poids une matrice polymérique dans un pourcentage compris entre 19,3% et 54,3%, un composé photoluminescent dans un pourcentage compris entre 45% et 80%, un oxyde de zirconium dans un pourcentage compris entre 0,5% et 15%, un azurant optique dans un pourcentage compris entre 0,2% et 7% et optionnellement un oxyde d'aluminium dans un pourcentage compris entre 0% et 2,5%, une silice poreuse dans un pourcentage compris entre 0% et 0,3%, un système de colorants et des additifs avec un pourcentage total pour le système de colorants et les additifs compris entre 0% et 15%.

L'azurant optique est utile pour avoir un blanc éclatant. En effet, il absorbe dans l'UV proche visible et réémet dans les bleus. Il permet de contrer notamment le côté jaunâtre du pigment phosphorescent.

L'ajout éventuel d'Al₂O₃ permet de blanchir plus intensément la formulation. L'ajout seul d'Al₂O₃ a un effet d'extinction trop rapide de la luminescence. Il est nécessaire de l'utiliser en combinaison avec la zircone pour éviter ce problème.

Optionnellement, le matériau photoluminescent comporte en outre de la silice poreuse dérivée d'algues qui permet d'augmenter les propriétés lumineuses. La silice poreuse provient de squelettes de diatomées. Il s'agit de microalgues qui sont des organismes unicellulaires à squelette de silice. En effet, selon les dernières recherches en biologie, la diatomée, algue monocellulaire qui compose le plancton, est constituée de nanocellules de silice très efficaces pour absorber la lumière du jour même dans les profondeurs sombres des océans afin de pouvoir effectuer leur photosynthèse de manière efficace. L'ajout d'un pourcentage limité de silice poreuse, avec des teneurs inférieures ou égales au pourcent en masse, dans la matière photoluminescente permet d'améliorer les propriétés de luminescence.

L'invention se rapporte également à l'article qui est réalisé en masse avec ce matériau photoluminescent ou revêtu avec ce matériau photoluminescent.

### Description détaillée de l'invention

L'invention concerne un matériau photoluminescent comportant de l'oxyde de zirconium (ZrO₂). Ce matériau peut être utilisé pour réaliser en masse un article ou pour revêtir un article. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran, un rehaut, un disque de quantième, une aiguille et un index de cadran.

Le matériau photoluminescent comporte (est constitué de) une matrice polymérique, un composé photoluminescent, l'oxyde de zirconium, un azurant optique et éventuellement un oxyde d'aluminium (Al₂O₃), une silice poreuse et un système de colorants et des additifs.

Par rapport au poids total du matériau photoluminescent, l'oxyde de zirconium sous forme de zircone stabilisée, par exemple avec 4% ou 5% molaire d'oxyde d'yttrium, est présent dans un pourcentage en poids compris entre 0,5% et 15% avec un pourcentage qui dépend de la couleur à réaliser. Préférentiellement il est compris entre 1% et 10%. Typiquement, la granulométrie de la zircone est submicronique avec un D50 de l'ordre de 500 nm.

La matrice polymérique est présente dans un pourcentage en poids compris entre 19,3% et 54,3%, de préférence entre 28,5% et 48,5%. On notera que la borne maximale pour la matrice polymérique est calculée pour un matériau photoluminescent sans oxyde d'aluminium, sans silice poreuse et sans un système de colorants et des additifs. En présence d'un de ces composés, la borne maximale sera réduite en conséquence pour ne pas dépasser un pourcentage de 100% pour l'ensemble des composés du matériau photoluminescent. Pour la matrice polymérique, il peut s'agir de tous les polymères transparents ou semi-transparents dans le visible. A titre d'exemple, il peut s'agir d'un ou plusieurs des polymères suivants : des résines de la famille des acryliques, de la famille des polyamides, de la famille des polyoléfines, de la famille des époxydes, de la famille des polyuréthanes, de la famille des élastomères fluorés et des silicones.

Le composé photoluminescent est présent dans un pourcentage en poids compris entre 45% et 80%, de préférence entre 50% et 70%. Le composé photoluminescent peut être formé d'un pigment ou d'un pigment encapsulé dans une coque transparente. Le pigment est de préférence un dérivé d'aluminate alcalino-terreux dopé aux terres rares. Plus spécifiquement, le pigment peut être de l'aluminate de strontium dopés Europium, Dysprosium avec la formule Sr(x)AI(y)O(z) : Eu²⁺,Dy³⁺. En particulier, il peut s'agir du Sr₄Al₁₄O₂₅ : Eu²⁺,Dy³⁺ ou encore du SrAl₂O₄ : Eu²⁺,Dy³⁺, éventuellement tous deux présents dans le composé photoluminescent. Avantageusement, les pigments peuvent présenter différentes granulométries pour permettre une répartition optimale dans le volume des pigments et éviter les espaces libres. La présence de différentes granulométries dans le volume permet également de cumuler des petites particules formant des pièges de faible profondeur en surface responsables d'une intensité lumineuse importante sur les temps courts avec des grosses particules formant des pièges plus profonds responsables de la rémanence lumineuse sur les temps longs. A titre d'exemple, les pigments peuvent présenter une première plage granulométrique centrée sur un diamètre D1 compris entre 500 nm et 10 µm, idéalement entre 500 nm et 5 µm et une deuxième plage granulométrique centrée sur un diamètre D2 compris entre 10 µm et 500 µm, idéalement entre 10 µm et 20 µm avec une mesure de la granulométrie réalisée par analyse granulométrique laser ISO 13320 :2020, éventuellement complétée par une analyse MEB d'imagerie par électrons secondaires. Il est à noter qu'il est possible de réaliser plus de deux fractions granulométriques par tamisage et de les combiner ensuite. Par exemple, il est possible d'avoir une première fraction entre 500 nm et 5 µm dans un pourcentage en poids de 20%, une deuxième fraction entre 5 µm et 20 µm dans un pourcentage en poids de 60% et une troisième fraction entre 20 µm et 50 µm dans un pourcentage en poids de 20%.

Les pigments peuvent éventuellement être encapsulés dans une coque transparente organique ou minérale. La coque organique peut typiquement être choisie parmi les polymères cités pour la matrice polymérique. Pour une coque minérale, il pourrait par exemple s'agir d'une coque en silice (SiO₂) obtenue via un procédé sol-gel. Toujours à titre d'exemple, on peut citer d'autres coques minérales telles que l'oxyde de zirconium (ZrO₂), l'oxyde d'aluminium (Al₂O₃), etc.

Le matériau photoluminescent comporte également un azurant optique pour donner un éclat de blancheur au matériau. Il est présent dans un pourcentage en poids compris entre 0,2% et 7%, de préférence entre 0,5% et 5%. Les azurants optiques utilisés sont des molécules organiques synthétiques dérivées des stilbènes contenant des groupements sulfonates qui absorbent entre 300 nm et 400 nm et réémettent dans le bleu-violet. Ils sont principalement utilisés dans le matériau comme agent blanchissant. Par exemple, il s'agit du distyrylbiphényle (DSBP) et des dérivés de diaminostilbène.

Optionnellement, le matériau photoluminescent peut comporter de l'oxyde d'aluminium (Al₂O₃) dans un pourcentage en poids compris entre 0% et 5%, de préférence entre 0% et 2,5%, selon le degré de blancheur souhaité. Avantageusement, il comporte entre 0,5% et 5% d'Al₂O₃, plus avantageusement entre 0,5% et 3%.

Le matériau photoluminescent comporte également optionnellement dans un pourcentage en poids compris 0% et 15%, de préférence entre 0,5% et 8%, un système de colorants et des additifs. Préférentiellement, il comporte entre 0,5% et 5% en poids d'un système de colorants. Ce système comporte préférentiellement des colorants organiques qui n'absorbent pas dans les plages de longueur d'onde d'émission du pigment photoluminescent. Il peut s'agir de pigments ou de colorants fluorescents dont l'absorption est plutôt dans les UVs et l'émission dans le spectre visible. Par exemple, il peut s'agir de pigments ou colorants fluorescents organiques comme ceux de la marque Radiant ou Aralon^{®}. Il peut également s'agir de pigments ou de colorants translucides absorbant peu dans les longueurs d'onde d'émission du pigment phosphorescent. Par exemple, il peut s'agir de pigments ou colorants translucides de la marque Clariant. D'autres additifs tels que des pigments à effet métallisé et nacré, des additifs anti-UVs pour protéger la matrice polymérique, un dispersant tel que du silane pour faciliter la dispersion des additifs et une charge nanométrique de type silice pour adapter les paramètres de viscosité du mélange, etc. peuvent être ajoutés.

Optionnellement, le matériau photoluminescent peut comporter de la silice poreuse provenant de squelettes de diatomées. Typiquement, le diamètre moyen des pores peut être de l'ordre de 500 µm. Eventuellement, il pourrait s'agir d'une silice poreuse synthétique. Pour une silice synthétique, les pores ont typiquement un diamètre moyen compris entre 0,1 µm et 3 µm. La silice poreuse est présente dans un pourcentage en poids compris entre 0% et 0,3%, de préférence entre 0,01% et 1%, plus préférentiellement entre 0,07% et 0,3%, encore plus préférentiellement entre 0,09% et 0,2%.

Le procédé de fabrication d'un article réalisé en masse dans le matériau photoluminescent consiste à mélanger le ou les polymères destinés à former la matrice polymérique avec préférentiellement un dispersant. Ce premier mélange est réalisé avec les pigments photoluminescents éventuellement préalablement encapsulés. Ensuite, l'oxyde de zirconium et l'azurant optique sont ajoutés à ce deuxième mélange avec également l'ajout éventuel du système de colorants, des additifs, de l'oxyde d'aluminium et de la silice poreuse. Les mélanges peuvent être réalisés soit partant de résines liquides avec un mélangeur type speed-mixer ou avec un mélangeur à pales. Le façonnage du mélange obtenu peut ensuite être réalisé par extrusion. Les mélanges peuvent également être réalisés dans une extrudeuse bi-vis ou dans un mélangeur haute vitesse pour la fabrication de mélange thermoplastique et la transformation en granulés, réutilisables pour le moulage par injection.

Le procédé de fabrication d'un article revêtu avec le matériau photoluminescent consiste à déposer un revêtement sur le substrat par des techniques telles que l'impression sérigraphie, la tampographie ou le sprayage.

Des essais pour fabriquer en masse des échantillons avec le matériau photoluminescence ont été réalisés en ajoutant 5% en poids, par rapport au poids total du matériau photoluminescent, de zircone yttriée à une résine époxy avec un taux de charge de 60% en poids de pigments photoluminescents d'Eu²⁺,Dy³⁺ :SrAl₂O₃. Les échantillons ont été observés sous cabine lumière D65. En parallèle, des essais ont été réalisés avec le TiO₂, ZnO, BaSO₄, CaCOs, SiO₂ et l'Al₂O₃ avec une même matière de base.

Des essais ont également été réalisés avec 5% en poids de zircone yttriée combinée à 0,25%, 2,5% et 5% en poids d'Al₂O₃.

Des essais ont également été réalisés avec 5% en poids de zircone yttriée combinée à 0.2% en poids de silice poreuse.

Le façonnage de la matière a été réalisé par moulage par coulée sous vide.

Ces essais ont montré que le meilleur compromis entre la blancheur et l'intensité de l'émission phosphorescente est obtenu avec la zircone yttriée, avec un niveau de blanc croissant en présence d'Al₂O₃ selon la qualité du blanc à réaliser en couleur visible.

Les essais avec la silice poreuse ont montré une augmentation des propriétés de luminescence de 20% après 10 minutes, les propriétés de luminescence étant mesurées selon la norme ISO 17514-2003.

## Revendications

1. Matériau photoluminescent comportant en poids une matrice polymérique dans un pourcentage compris entre 19,3% et 54,3%, un composé photoluminescent dans un pourcentage compris entre 45% et 80%, un oxyde de zirconium dans un pourcentage compris entre 0,5% et 15%, un azurant optique dans un pourcentage compris entre 0,2% et 7% et optionnellement un oxyde d'aluminium dans un pourcentage compris entre 0% et 5%, une silice poreuse dans un pourcentage compris entre 0% et 0,3%, un système de colorants et des additifs avec un pourcentage total pour le système de colorants et les additifs compris entre 0% et 15%.

2. Matériau photoluminescent selon la revendication 1, **caractérisé en ce que** la matrice polymérique est présente dans un pourcentage compris entre 28,5% et 48,5%, le composé photoluminescent dans un pourcentage compris entre 50% et 70%, l'oxyde de zirconium dans un pourcentage compris entre 1% et 10% et l'azurant optique dans un pourcentage compris entre 0,5% et 5%.

3. Matériau photoluminescent selon l'une des revendications précédentes, **caractérisé en ce que** l'oxyde d'aluminium est présent dans un pourcentage compris entre 0,5% et 5% d'Al₂O₃, de préférence entre 0,5% et 3%.

4. Matériau photoluminescent selon l'une des revendications précédentes, **caractérisé en ce que** la silice poreuse est présente dans un pourcentage compris entre 0,01% et 1 %, de préférence entre 0,07% et 0,3%, plus préférentiellement entre 0,09% et 0,2%.

5. Matériau photoluminescent selon l'une des revendications précédentes, **caractérisé en ce que** la silice poreuse est issue de squelettes de diatomées.

6. Matériau photoluminescent selon l'une des revendications précédentes, **caractérisé en ce que** le composé photoluminescent comporte un pigment qui est un dérivé d'aluminate alcalino-terreux dopé aux terres rares.

7. Matériau photoluminescent selon la revendication précédente, **caractérisé en ce que** le pigment est un dérivé d'aluminate alcalino-terreux dopé Europium, Dysprosium de formule Sr(x)AI(y)O(z) : Eu²⁺,Dy³⁺.

8. Matériau photoluminescent selon la revendication précédente, **caractérisé en ce que** le pigment est du Se₄Al₁₄O₂₅ : Eu²⁺,Dy³⁺ et/ou du SrAl₂O₄ : Eu²⁺,Dy³.

9. Matériau photoluminescent selon l'une des revendications 6 à 8, **caractérisé en ce que** le composé photoluminescent est constitué dudit pigment encapsulé dans une coque transparente organique ou minérale.

10. Matériau photoluminescent selon l'une des revendications précédentes, **caractérisé en ce que** l'oxyde de zirconium est stabilisé, de préférence avec de l'oxyde d'yttrium.

11. Matériau photoluminescent selon l'une des revendications précédentes, **caractérisé en ce que** la matrice polymérique comporte une ou plusieurs des résines de la famille des acryliques, de la famille des polyamides, de la famille des polyoléfines, de la famille des époxydes, de la famille des polyuréthanes, de la famille des élastomères fluorés et des silicones.

12. Matériau photoluminescent selon la revendication 9, **caractérisé en ce que** la coque transparente organique comporte une ou plusieurs des résines de la famille des acryliques, de la famille des polyamides, de la famille des polyoléfines, de la famille des époxydes, de la famille des polyuréthanes, de la famille des élastomères fluorés et des silicones et **en ce que** la coque transparente minérale comporte de la silice.

13. Matériau photoluminescent selon l'une des revendications 6 à 12, **caractérisé en ce que** le composé photoluminescent comporte des pigments de différentes granulométries.

14. Matériau photoluminescent selon la revendication précédente, **caractérisé en ce que** les pigments présentent au moins une première plage granulométrique centrée sur un diamètre D1 compris entre 500 µm et 10 µm et une deuxième plage granulométrique centrée sur un diamètre D2 compris entre 10 µm et 500 µm.

15. Matériau photoluminescent selon l'une des revendications précédentes, **caractérisé en ce que** l'azurant optique est un dérivé du stilbène contenant un groupement sulfonate.

16. Article réalisé dans ou revêtu avec ledit matériau photoluminescent selon l'une des revendications précédentes.

17. Article selon la revendication précédente, **caractérisé en ce qu'**il s'agit d'un composant horloger.
